# EUROPEAN PATENT SPECIFICATION

(11) **EP 4 417 529 B1**
(45) Date of publication and mention of the grant of the patent: **26.11.2025**
(21) Application number: 22881376.2
(22) Date of filing: 13.10.2022
(51) Int. Cl.: B65B 57/18, B65B 35/16, B65B 25/14, B65B 43/26, B65B 51/10, B65B 31/04, B65D 33/00

(54) **TRANSFER DEVICE FOR ELECTRODE DOUBLE PACKAGING DEVICE AND ELECTRODE DOUBLE PACKAGING DEVICE INCLUDING SAME**
ÜBERTRAGUNGSVORRICHTUNG FÜR ELEKTRODENDOPPELVERPACKUNGSVORRICHTUNG UND ELEKTRODENDOPPELVERPACKUNGSVORRICHTUNG DAMIT
DISPOSITIF DE TRANSFERT POUR DISPOSITIF DE DOUBLE EMBALLAGE D'ÉLECTRODE ET DISPOSITIF DE DOUBLE EMBALLAGE D'ÉLECTRODE LE COMPRENANT

(30) Priority: 14.10.2021 KR 20210136368; 20.10.2021 KR 20210140177
(43) Date of publication of application: 21.08.2024
(73) Proprietor: LG ENERGY SOLUTION, LTD., Seoul 07335 (KR)
(72) Inventor: KIM, Dong Wook, Daejeon 34122 (KR)
(74) Representative: Goddar, Heinz J.
(86) International application number: PCT/KR2022/015514
(87) International publication number: WO 2023/063749

(56) References cited:
- WO-A1-2012/060142
- JP-A- 2002 337 816
- JP-A- 2002 347 713
- JP-A- 2005 096 810
- JP-A- 2005 255 225
- KR-A- 20170 044 825
- KR-A- 20170 112 392
- KR-A- 20200 066 018
- KR-U- 20000 018 832
- US-A1- 2005 058 889
- US-A1- 2008 236 102

## Description

### Technical Field

The present invention relates to a transport device for a double electrode packaging device and an electrode double packaging device comprising the same.

### Background Art

In general, the electrode is produced, and then packaged, in a state of being wound on an electrode roll, in a packaging bag, and shipped out as a final product.

Here, in order to increase storage stability, such as prevention of moisture penetration as well as foreign substance penetration, or appearance damage, the double packaging technology performing primary packaging and secondary packaging with packaging bags of different materials was applied to the packaging of the electrode roll.

Meanwhile, in the process of transporting the electrode roll that the primary packaging had been completed to a secondary packaging location, there was a problem that a part of the packaging bag was jammed or caught in the transport device or peripheral devices, and thus the packaging bag was torn or the device was broken.

In general, the transport device of the electrode double packaging device serves to transport the electrode roll to the packaging location in a seated state. In the case of the primarily packaged electrode roll, the packaging bag was in contact with the seating portion of the transport device, and a phenomenon frequently occurred, in which the packaging bag in contact with the seating portion was torn in the contact process or in the transport process, and in order to solve this problem, a rubber pad was introduced into the seating portion.

The rubber pad needs to be replaced because it is worn out after using it for a certain period of time. However, even if the rubber pad is worn, it is not easy to immediately detect and replace it, and in fact, since the replacement time of the rubber pad was grasped from product damage caused by the wear of the rubber pad, there was a problem that product productivity was lowered.

A transport device for an electrode packaging device is disclosed in JP 2002 337816 A1.

### Disclosure

### Technical Problem

It is a problem to be solved of the present invention to provide a transport device for an electrode double packaging device capable of preventing, in a process of transporting an electrode roll that the primary packaging has been completed to a secondary packaging location, a problem that a part of a packaging bag is jammed or caught in the transport device or peripheral devices, and an electrode double packaging device comprising the same.

In addition, it is a problem to be solved of the present invention to provide a packaging device for an electrode capable of preventing packaging bag damage due to a worn rubber pad by sensing abrasion of a rubber pad of a transport device provided on a seating portion of the primarily packaged electrode roll, and notifying the replacement time of the rubber pad.

### Technical Solution

In order to solve the above problems, according to one aspect of the present invention, a transport device for an electrode double packaging device, in which an unpackaged electrode roll is primarily packaged in a first packaging bag, and the primarily packaged electrode roll is secondarily packaged in a second packaging bag, comprising a seating part having a seating groove for seating the primarily packaged electrode roll, a moving part for moving the seating part, a packaging bag arrangement part provided to move together with the seating part by the moving part, and for closely attaching the first packaging bag toward the electrode roll seated on the seating groove when moving, and a control part provided to perform a seating mode for controlling the moving part to move the seating part so that the electrode roll is seated in the seating groove, and a transport mode for transporting the seating part, on which the electrode roll is seated, to a secondary packaging location, is provided.

The electrode roll may comprise a body on which the electrode is wound, a pair of support plates formed on both sides of the body, and protruding portions formed to protrude from the center of each support plate in a direction opposite to the body.

Also, the seating groove is provided such that the protruding portions of the electrode roll are seated.

Furthermore, in the seating mode, the packaging bag arrangement part is provided to closely attach the edge portion of the first packaging bag positioned around the support plate of the electrode roll to the support plate side.

In addition, the seating mode may comprise a first movement mode in which the seating part is moved in a first direction so that the seating groove is located at the lower ends of the protruding portions of the electrode roll, and a second movement mode in which the seating part is moved in a second direction which is a perpendicular direction to the first direction so that the lower ends of the protruding portions of the electrode roll are seated on the seating groove.

Also, upon the first movement mode, the packaging bag arrangement part may be provided to push the first packaging bag portion of the top of the protruding portion to the edge of the support plate while moving along the first direction from the top side of the protruding portion.

Furthermore, upon the first movement mode, the packaging bag arrangement part may be provided to move at a predetermined distance apart from the support plate.

In addition, upon the first movement mode, the edge portion of the first packaging bag positioned around the support plate may be accommodated in the space formed by the gap between the packaging bag arrangement part and the support plate. That is, upon the first movement mode, the first packaging bag portion pushed to the support plate side by the packaging bag arrangement part may be accommodated in the space formed by the gap between the packaging bag arrangement part and the support plate.

Also, the transport device for an electrode double packaging device may further comprise a seating pad provided in the seating groove, an abrasion sensing sensor for sensing abrasion of the seating pad, and a notification part for notifying pad replacement when the abrasion of the seating pad is sensed by the abrasion sensing sensor.

Furthermore, the control part may control the operation of the moving part according to whether the abrasion of the seating pad is sensed by the abrasion sensing sensor.

**In** addition, the seating pad may be a rubber pad.

Also, the abrasion sensing sensor may comprise a laser sensor.

Furthermore, when abrasion of the rubber pad by the laser sensor is sensed, the control part may be provided to stop performing the seating mode and the transport mode of the moving part.

According to another aspect of the present invention, an electrode double packaging device comprising an electrode roll supply part for supplying an unpackaged electrode roll, a first packaging bag supply part for supplying a first packaging bag to a primary packaging location, a second packaging bag supply part for supplying a second packaging bag of a material different from that of the first packaging bag to a secondary packaging location, a first transport device for transporting the unpackaged electrode roll, a first packaging part for primarily packaging the unpackaged electrode roll transported by the first transport device with the first packaging bag, a second transport device for transporting the primarily packaged electrode roll, and a second packaging part for secondarily packaging the primarily packaged electrode roll transported by the second transport device with the second packaging bag is provided.

Here, the second transport device comprises a seating part having a seating groove provided so that the primarily packaged electrode roll can be seated, a moving part for moving the seating part, a packaging bag arrangement part provided to move together with the seating part by the moving part, and for closely attaching the first packaging bag to the electrode roll side when moving, and a control part provided to perform a seating mode for controlling the moving part to move the seating part so that the electrode roll is seated in the seating groove, and a transport mode for transporting the seating part, on which the electrode roll is seated, to the secondary packaging location.

Also, the electrode roll may comprise a body on which the electrode is wound, a pair of support plates formed on both sides of the body, and protruding portions formed to protrude from the center of each support plate in a direction opposite to the body, the seating groove may be provided to seat the protruding portions of the electrode roll, and in the seating mode, the packaging bag arrangement part may be provided to closely attach the edge portion of the first packaging bag positioned around the support plate of the electrode roll to the support plate side.

Furthermore, the seating mode may comprise a first movement mode in which the seating part is moved in a first direction so that the seating groove is located at the lower ends of the protruding portions of the electrode roll, and a second movement mode in which the seating part is moved in a second direction which is a perpendicular direction to the first direction so that the lower ends of the protruding portions of the electrode roll are seated on the seating groove.

In addition, the second transport device may comprise a seating pad provided in the seating groove, an abrasion sensing sensor for sensing abrasion of the seating pad, and a notification part for notifying pad replacement when the abrasion of the seating pad is sensed by the abrasion sensing sensor.

Also, the first packaging bag may be a polyethylene packaging bag, and the second packaging bag may be an aluminum packaging bag.

Furthermore, the seating pad may be a rubber pad, and the abrasion sensing sensor may comprise a laser sensor.

In addition, when abrasion of the rubber pad by the laser sensor is sensed, the control part may be provided to stop performing the seating mode and the transport mode of the moving part.

### Advantageous Effects

As described above, the transport device for an electrode double packaging device related to at least one example of the present invention, and an electrode double packaging device comprising the same have the following effects.

Before the electrode roll primarily packaged with the first packaging bag is moved to the secondary packaging location, the first packaging bag is arranged such that it is closely attached to the electrode roll, whereby the j amming/trapping of the first packaging bag that can occur in the process of being transported to the second packing location is prevented, so that it is possible to solve the problem that the packaging bag is torn or the peripheral devices are broken.

In addition, by sensing the abrasion of the rubber pad through the abrasion sensing sensor and notifying the replacement signal of the pad, it is possible to prevent damage to the packaging bag due to the abrasion of the rubber pad.

### Description of Drawings

Figure 1 is a diagram showing an exemplary transport device for an electrode double packaging device according to the present invention.
Figure 2 is a diagram for explaining the structure of the primarily packaged electrode roll.
Figures 3 to 5 are diagrams for explaining the operating principle of the transport device.
Figures 6 to 8 are configuration diagrams showing exemplary electrode double packaging devices according to the present invention.
Figure 9 is a diagram for explaining a process in which an electrode roll is transported into a packaging bag.

### Mode for Invention

In the entire specification, when a part "comprises" a certain component, it means that other components may be further included, rather than excluding other components, unless otherwise stated. Also, in the entire specification, when a part is "connected" or "coupled" to another part, it comprises not only a case of being "directly connected" or "directly coupled", but also a case of being connected "with another configuration interposed in the middle".

Hereinafter, examples of the present invention will be described in detail with reference to the accompanying drawings so that those having ordinary knowledge in the technical field to which the present invention pertains can easily carry out them. However, the present invention may be embodied in various different forms, which is not limited to the examples described herein. Then, in order to clearly explain the present invention in the drawings, parts irrelevant to the description have been omitted, and similar reference numerals are attached to similar parts throughout the specification.

Hereinafter, the present invention will be described in detail with reference to the accompanying drawings.

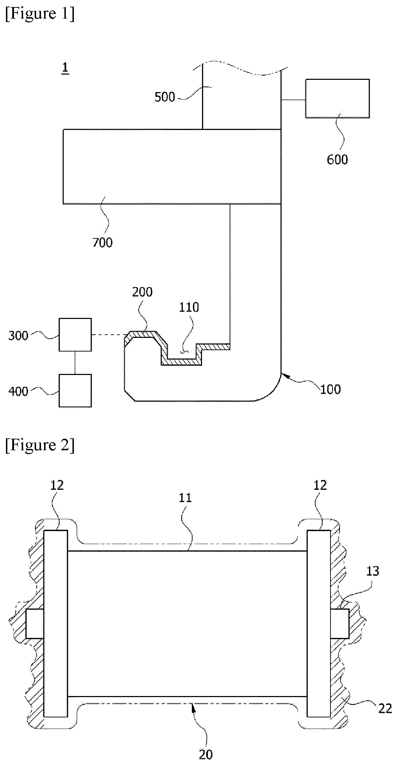

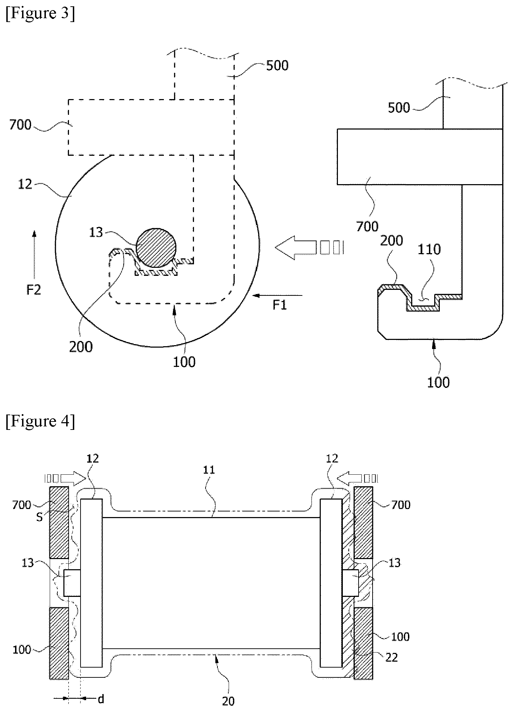

Figure 1 is a diagram showing an exemplary transport device (1) for an electrode double packaging device according to the present invention, Figure 2 is a diagram for explaining the structure of the primarily packaged electrode roll, and Figures 3 to 5 are diagrams for explaining the operating principle of the transport device.

The present invention relates to a transport device (1) of an electrode double packaging device for primarily packaging an unpackaged electrode roll with a first packaging bag and secondarily packaging the primarily packaged electrode roll with a second packaging bag. For example, the transport device (1) may be a device for transporting the electrode roll, on which the primary packaging is completed, to a secondary packaging location.

Referring to Figures 1 to 3, the transport device (1) comprises a seating part (100), a packaging bag arrangement part (700), a moving part (500), and a control part (600).

The seating part (100) has a seating groove (110) for seating the primarily packaged electrode roll.

In addition, the moving part (500) is provided to move the seating part (100), and the moving part (500) may be composed of a known driving part such as an oil hydraulic cylinder, a pneumatic cylinder, or a motor.

The control part (600) is provided to perform a seating mode for controlling the moving part (500) to move the seating part (100) so that the electrode roll is seated in the seating groove (110), and a transport mode for transporting the seating part (100), on which the electrode roll is seated, to the secondary packaging location.

The packaging bag arrangement part (700) is provided to move together with the seating part (100) by the moving part (500), and is provided to closely attach the first packaging bag (20) toward the electrode roll seated on the seating groove (110) when moving. That is, the packaging bag arrangement part (700) performs a function of arranging the first packaging bag (20) so that the first packaging bag (20) is closely attached toward the electrode roll seated on the seating groove (110) when moving. The packaging bag arrangement part (700) is connected to the seating part (100), which may have, in one example, a plate shape.

The control part (600) may be provided to perform a seating mode for controlling the moving part (500), whereby the electrode roll moves to be seated in the seating groove (110), and a transport mode for transporting the seating part (100), on which the electrode roll is seated, to the secondary packaging location. The control part (600) may control the moving part (500) to sequentially perform a seating mode and a transport mode. In addition, the moving part (500), the seating part (100), and the packaging bag arrangement part (700) may be connected to each other. Accordingly, the seating part (100) and the packaging bag arrangement part (700) may move together in the moving direction of the moving part (500). In addition, the control part (600) may control the moving part (500) to perform a separation mode in which the electrode roll is separated from the seating part (100). The separation mode may be performed after arriving at the secondary packaging location.

Referring to Figure 2, the electrode roll may comprise a body (11) on which the electrode is wound, a pair of support plates (12) formed on both sides of the body (11), and protruding portions (13) formed to protrude from the center of each support plate in a direction opposite to the body (11). The body (11) may have, for example, a cylindrical shape, and the support plate (12) may be formed to have a larger diameter than the diameter of the body (11). The support plate (12) functions to prevent the electrode wound on the body (11) from being separated to the outside.

Also, the seating groove (110) is provided so that the protruding portion (13) of the electrode roll is seated, and as the protruding portion (13) is seated in the seating groove (110), it is possible to prevent the protruding portion (13) from being separated to the outside of the seating part (100) in the transport process.

Furthermore, the primarily packaged electrode roll is completely surrounded by the first packaging bag (20), and the edge portion (22) of the first packaging bag (20) is positioned around the support plate (12). The edge portion (22) of the first packaging bag (20) refers to a portion protruding to the outside without being in close contact with the electrode roll (10). In the present application, the packaging bag arrangement part (700) serves to arrange the edge portion (22) of the first packaging bag.

In addition, in the seating mode, the packaging bag arrangement part (700) is provided to closely attach the edge portion (22) of the first packaging bag (20) positioned around the support plate (12) of the electrode roll to the support plate (12) side. The edge portion (22) of the first packaging bag (20) means a portion swollen to protrude the outside of the support plate (12) without being closely attached to the support plate (12) side.

The edge portion (22) of the first packaging bag (20) may cause a problem of being caught or jammed in a peripheral device or a transport device during the transport mode. The packaging bag arrangement part (700) may prevent the jamming problem in advance by arranging the edge portion (22) of the first packaging bag (20) in the seating mode, which is a step before the transport mode.

Also, the seating mode may comprise a first movement mode in which the seating part (100) is moved in a first direction (F1) so that the seating groove (110) is located at the lower ends of the protruding portions (13) of the electrode roll, and a second movement mode in which the seating part (100) is moved in a second direction (F2) which is a perpendicular direction to the first direction (F1) so that the lower ends of the protruding portions (13) of the electrode roll are seated on the seating groove (110).

Furthermore, upon the first movement mode, the packaging bag arrangement part (700) may be provided to push the edge portion of the first packaging bag located on the top of the protruding portion (13) toward the support plate (12) while moving along the first direction (F1) from the top side of the protruding portion (13).

Referring to Figures 3 and 4, upon the first movement mode, the packaging bag arrangement part (700) may be moved along the first direction (F1) from the top side of the protruding portion (13). The packaging bag arrangement part (700) may be arranged vertically to face the seating part (100) with the protruding portion (13) interposed therebetween. The packaging bag arrangement part (700) may closely attach the edge portion of the first packaging bag (20) located around the support plate (12) of the electrode roll along the first direction (F1) from the top side of the protruding portion (13) to the support plate (12) side.

In addition, upon the first movement mode, the packaging bag arrangement part (700) may be provided to move at a predetermined distance (d) apart from the support plate (12).

Upon the first movement mode, the edge portion (22) of the first packaging bag positioned around the support plate (12) may be accommodated in the space (S) formed by the gap (d) between the packaging bag arrangement part (70) and the support plate (12). That is, upon the first movement mode, the first packaging bag portion pushed to the support plate (12) side by the packaging bag arrangement part (700) may be accommodated in the space (S) formed by the gap (d) between the packaging bag arrangement part (700) and the support plate (12).

When performing the seating mode, the control part (600) may control the second movement mode to be performed after the first movement mode is performed. In the first movement mode, the seating part (100) and the protruding portion (13) do not contact each other, and in the second movement mode, the protruding portion (13) is seated on the seating groove (110).

In addition, the transport device (1) for an electrode double packaging device may comprise a seating pad (200) provided in the seating groove (110), an abrasion sensing sensor (300) for sensing abrasion of the seating pad (200), and a notification part (400) for notifying pad replacement when the abrasion of the seating pad (200) is sensed by the abrasion sensing sensor.

The seating pad (200) is provided in the seating groove (110) in which the protruding portion (13) of the primarily packaged electrode roll is seated. Accordingly, the seating pad (200) has a seating surface on which the protruding portion (13) of the electrode roll is seated. The abrasion sensing sensor (300) senses the abrasion of the seating pad (200). The notification part (400) notifies the replacement of the pad when the abrasion of the seating pad (200) is sensed by the abrasion sensing sensor (300).

In addition, the control part (600) may control the operation of the moving part (500) according to whether the abrasion of the seating pad (200) is sensed by the abrasion sensing sensor (300).

The seating pad (200) may be formed of a material different from that of the seating groove (110). For example, the seating pad (200) may be a rubber pad formed of a rubber material.

The transport device (1) according to the present application notifies the replacement time of the rubber pad (200) through the abrasion sensing sensor (300) and the notification part (400), whereby the problem that the packaging bag is torn by the worn rubber pad (200) problems can be prevented. The abrasion sensing sensor (300) may be, for example, a laser sensor.

The abrasion sensing sensor (300) is provided to recognize the seating surface of the rubber pad (200) that is not worn. When the rubber pad (200) is worn, the abrasion sensing sensor (300) generates an error because the seating surface is unrecognized. **In** addition, the abrasion sensing sensor (300) is provided to recognize at least some areas of the rubber pad (200). The abrasion sensing sensor (300) is provided to recognize at least some areas of the rubber pad (200), whereby in the process of replacing the worn rubber pad (200) with a new rubber pad, if the new rubber pad is not mounted by mistake (pad missing), at least some areas of the rubber pad (200) are not recognized, thereby generating an error.

When such an error occurs, the notification part (400) may notify the replacement time of the worn pad in visual and audible methods.

Also, the abrasion sensing sensor (300) may comprise a laser sensor.

Furthermore, when the abrasion of the rubber pad (200) is sensed by the laser sensor, the control part (600) may be provided to stop performing the seating mode and the transport mode of the moving part (500).

As the operation of the moving part (500) is controlled by the control part (600), the operator can safely perform the replacement work of the worn pad.

For example, when the abrasion of the rubber pad (200) is sensed by the abrasion sensing sensor (300), the control part (600) may stop performing the seating mode and the transport mode of the moving part (500). Furthermore, as the seating mode and the transport mode of the moving part (500) are stopped, the entire process of the packaging device may be stopped. This is to prevent a product with the torn packaging bag by the worn rubber pad from being shipped out as a final product.

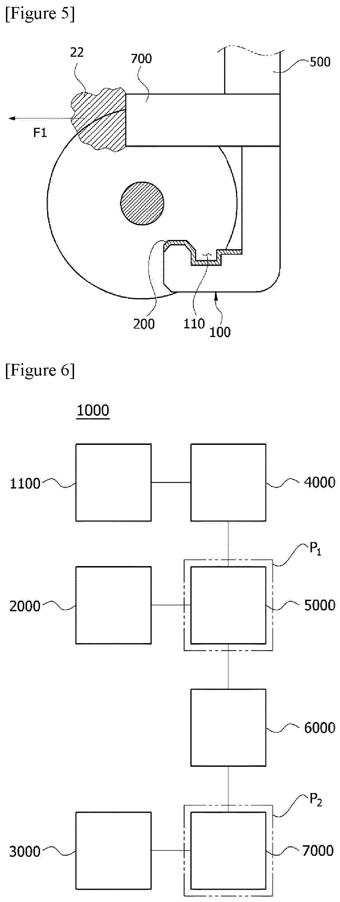

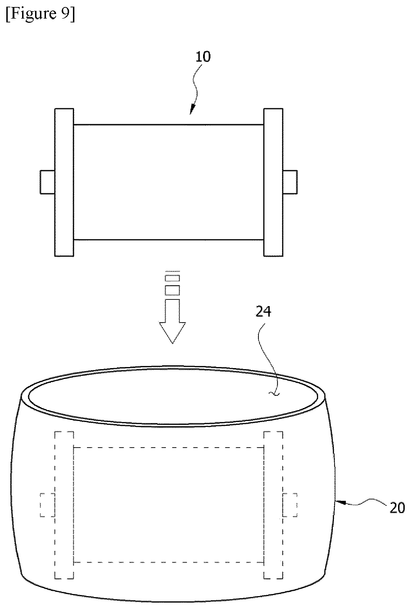

Figures 6 to 8 are configuration diagrams showing exemplary electrode double packaging devices (1000) according to the present invention, and Figure 9 is a diagram for explaining a process in which an electrode roll is transported into a packaging bag.

The present application relates to an electrode double packaging device (100) comprising the transport device (1) for the electrode double packaging device described through Figures 1 to 5.

Referring to Figure 6, the electrode double packaging device (1000) related to one example of the present invention comprises an electrode roll supply part (1100), a first packaging bag supply part (2000), a second packaging bag supply part (3000), a first transport device (4000), a first packaging part (5000), a second transport device (6000), and a second packaging part (7000).

The electrode double packaging device (1000) comprises an electrode roll supply part (1100) for supplying an unpackaged electrode roll, a first packaging bag supply part (2000) for supplying a first packaging bag to a primary packaging location (P1), and a second packaging bag supply part (3000) for supplying a second packaging bag of a material different from that of the packaging bag to a secondary packaging location (P2), a first transport device (4000) for transporting the unpackaged electrode roll, and a first packaging part (5000) for primarily packaging the unpackaged electrode roll transported by the first transport device (4000) with the first packaging bag, a second transport device (6000) for transporting the primarily packaged electrode roll, and a second packaging part (7000) for secondarily packaging the primarily packaged electrode roll transported by the second transport device (6000) with the second packaging bag.

The electrode roll supply part (1100) supplies an unpackaged electrode roll. Here, the unpackaged electrode roll means an electrode roll that is not packaged with the first packaging bag and the second packaging bag.

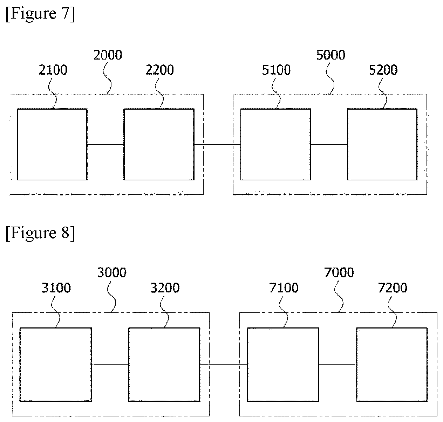

Referring to Figures 6 and 7, the first packaging bag supply part (2000) supplies the first packaging bag to the primary packaging location (P₁). The first packaging bag supply part (2000) may comprise a first packaging seating part (2100) in which a plurality of first packaging bags is seated, and a first packaging bag transport part (2200) for transporting the first packaging bags from the first packaging bag seating part (2100) to the first packaging location (P1) one by one.

Referring to Figures 6 and 8, the second packaging bag supply part (3000) supplies a second packaging bag of a material different from that of the first packaging bag to the secondary packaging location (P2). The second packaging bag supply part (3000) may comprise a second packaging bag seating part (3100) in which a plurality of second packaging bags is seated, and a second packaging bag transport part (3200) for transporting the second packaging bags from the second packaging bag seating part (3100) to the secondary packaging location (P2) one by one.

The first transport device (4000) may comprise a first seating part provided to allow the unpackaged electrode roll to be seated, and a first moving part for moving the first seating part. In addition, the first transport device (4000) may comprise a first control part for performing a first seating mode that controls the first moving part, whereby the unpacked electrode roll moves to be seated, and a first transport mode that transports the seated unpackaged electrode roll to the primary packaging location. The first transport device (4000) may be provided to perform the first transport mode after completing the first seating mode.

The first packaging part (5000) primarily packages the unpackaged electrode roll transported by the first transport device (4000) with the first packaging bag. The first packaging part (5000) is located at the primary packaging location (P₁).

The second transport device (6000) is the same as the transport device (1) for the electrode double packaging device described through Figures 1 to 5. Specifically, the second transport device (6000) comprises a seating part (100, see Figure 1) having a seating groove provided so that the primarily packaged electrode roll can be seated, a moving part (500, see Figure 1) for moving the seating part, a packaging bag arrangement part (700, see Figure 1) provided to move together with the seating part by the moving part, and for arranging the first packaging bag so that the first packaging bag is closely attached toward the electrode roll seated in the seating groove when moving, and a control part (600, see Figure 1) provided to perform a seating mode that controls the moving part, whereby the electrode roll moves to be seated in the seating groove, and a transport mode that transports the electrode roll seated in the seating part to a secondary packaging location. In order to distinguish them from the components of the first transport device, in this document, the seating part of the second transport device (6000) may be referred to as a second seating part, and the moving part may be referred to as a second moving part, and the control part may be referred to as a second control part.

As described above through Figures 1 to 5, the seating mode may comprise a first movement mode in which the seating part is moved in a first direction so that the seating groove is located at the lower ends of the protruding portions of the electrode roll, and a second movement mode in which the seating part is moved in a second direction which is a perpendicular direction to the first direction so that the lower ends of the protruding portions of the electrode roll are seated on the seating groove.

In addition, the second transport device (6000) may further comprise a seating pad provided in the seating groove, an abrasion sensing sensor for sensing abrasion of the seating pad, and a notification part for notifying pad replacement when the abrasion of the seating pad is sensed by the abrasion sensing sensor.

Since the second transport device (6000) is the same device as the above-described transport device (1), detailed descriptions of the structure and operation of the second transport device (6000) will be omitted because they overlap with the above-described contents.

The second packaging part (7000) secondarily packages the electrode roll transported by the second transport device (6000) with the second packaging bag.

Referring to Figures 7 and 9, the first packaging bag (20) may comprise a first opening portion (22), and the first packaging part (5000) may comprise a packaging bag expansion portion (5100) to expand the first opening portion (24), and a first packaging bag sealing portion (5200) to seal the first opening portion (24).

In addition, the second packaging bag may also comprise a second opening portion in the same manner as the first packaging bag. At this time, the second packaging part (7000) may comprise a second packaging bag expansion portion (7100) to expand the second opening portion and a second packaging bag sealing portion (7200) to seal the second opening portion. The first and second packaging bag expansion portions serve to expand the opening portions in order to secure a space where the electrode roll can enter the inside of the packaging bag.

Furthermore, the first packaging bag sealing portion (5200) may perform vacuum sealing. In addition, the second packaging bag sealing portion (7200) may also perform vacuum sealing. By performing the vacuum sealing, the storage retainability of the electrode can be improved.

In one example, the first packaging bag may be a polyethylene packaging bag. The polyethylene packaging bag function to prevent foreign substance penetration.

In another example, the second packaging bag may be an aluminum packaging bag. The aluminum packaging bag functions to prevent moisture penetration.

Besides, the material of the packaging bag may be selected from various materials according to a desired purpose.

### Industrial Applicability

According to the transport device for the electrode double packaging device related to at least one example of the present invention, and the electrode double packaging device comprising the same, it is possible to prevent the packaging bag from being jammed in the transport process.

## Claims

1. A transport device (1) for an electrode double packaging device, in which an unpackaged electrode roll (10) is primarily packaged in a first packaging bag (20), and the primarily packaged electrode roll is secondarily packaged in a second packaging bag, comprising:
a seating part (100) having a seating groove (40) for seating the primarily packaged electrode roll;
a moving part (500) for moving the seating part;
a packaging bag arrangement part (700) provided to move together with the seating part by the moving part, and for closely attaching the first packaging bag (20) toward the electrode roll seated on the seating groove when moving, and
a control part (600) provided to perform a seating mode for controlling the moving part (500) to move the seating part so that the electrode roll is seated in the seating groove (110), and a transport mode for transporting the seating part, on which the electrode roll (10) is seated, to a secondary packaging location.

2. The transport device for an electrode double packaging device according to claim 1,
wherein
the electrode roll comprises a body (11) on which the electrode is wound, a pair of support plates (12) formed on both sides of the body, and protruding portions (13) formed to protrude from the center of each support plate in a direction opposite to the body, and
the seating groove (110) is provided such that the protruding portions of the electrode roll are seated.

3. The transport device for an electrode double packaging device according to claim 2,
wherein
in the seating mode, the packaging bag arrangement part (700) closely attaches the edge portion (22) of the first packaging bag positioned around the support plate of the electrode roll to the support plate side.

4. The transport device for an electrode double packaging device according to claim 3,
wherein
the seating mode comprises a first movement mode in which the seating part (100) is moved in a first direction so that the seating groove (110) is located at the lower ends of the protruding portions (22) of the electrode rol (10) ; and
a second movement mode in which the seating part is moved in a second direction which is a perpendicular direction to the first direction so that the lower ends of the protruding portions of the electrode roll are seated on the seating groove (110).

5. The transport device for an electrode double packaging device according to claim 4, wherein upon the first movement mode,
the packaging bag arrangement part (700) pushes the first packaging bag portion of the top of the protruding portion toward the support plate (12) while moving along the first direction from the top side of the protruding portion (13).

6. The transport device for an electrode double packaging device according to claim 5, wherein upon the first movement mode,
the packaging bag arrangement part (700) moves at a predetermined distance apart from the support plate (12).

7. The transport device for an electrode double packaging device according to claim 6,
wherein
upon the first movement mode, the edge portion (22) of the first packaging bag positioned around the support plate (12) is accommodated in the space formed by the gap (d) between the packaging bag arrangement part and the support plate.

8. The transport device for an electrode double packaging device according to claim 1, further comprising:
a seating pad (200) provided in the seating groove (110);
an abrasion sensing sensor (300) for sensing abrasion of the seating pad; and
a notification part for notifying pad replacement when the abrasion of the seating pad is sensed by the abrasion sensing sensor.

9. The transport device for an electrode double packaging device according to claim 8,
wherein
the control part controls the operation of the moving part according to whether the abrasion of the seating pad (200) is sensed by the abrasion sensing sensor (300).

10. The transport device for an electrode double packaging device according to claim 9,
wherein
the seating pad (200) is a rubber pad,
the abrasion sensing sensor (300) comprises a laser sensor, and
when abrasion of the rubber pad by the laser sensor is sensed, the control part stops performing the seating mode and the transport mode of the moving part.

11. An electrode double packaging device (1) comprising;
an electrode roll supply part (1100) for supplying an unpackaged electrode roll (10);
a first packaging bag supply part (2000) for supplying a first packaging bag (20) to a primary packaging location;
a second packaging bag supply part (3000) for supplying a second packaging bag of a material different from that of the first packaging bag to a secondary packaging location;
a first transport device (4000) for transporting the unpackaged electrode roll;
a first packaging part (5000) for primarily packaging the unpackaged electrode roll transported by the first transport device with the first packaging bag;
a second transport device (6000) for transporting the primarily packaged electrode roll; and
a second packaging part (7000) for secondarily packaging the primarily packaged electrode roll transported by the second transport device with the second packaging bag; wherein
the second transport device (6000) comprises: a seating part (100) having a seating groove (110) provided so that the primarily packaged electrode roll can be seated;
a moving part (500) for moving the seating part;
a packaging bag arrangement part (70) provided to move together with the seating part by the moving part, and for closely attaching the first packaging bag to the electrode roll side when moving; and
a control part (600) provided to perform a seating mode for controlling the moving part to move the seating part (100) so that the electrode roll is seated in the seating groove (110), and a transport mode for transporting the seating part, on which the electrode roll is seated, to the secondary packaging location.

12. The electrode double packaging device according to claim 11, wherein
the electrode roll comprises a body (11) on which the electrode is wound, a pair of support plates formed on both sides of the body, and protruding portions (13) formed to protrude from the center of each support plate (12) in a direction opposite to the body,
the seating groove (110) is provided such that the protruding portions of the electrode roll are seated, and
in the seating mode, the packaging bag arrangement part closely attaches the edge portion of the first packaging bag positioned around the support plate of the electrode roll to the support plate side.

13. The electrode double packaging device according to claim 12, wherein
the seating mode comprises: a first movement mode in which the seating part (100) is moved in a first direction so that the seating groove (110) is located at the lower ends of the protruding portions of the electrode roll; and
a second movement mode in which the seating part is moved in a second direction which is a perpendicular direction to the first direction so that the lower ends of the protruding portions of the electrode roll are seated on the seating groove.

14. The electrode double packaging device according to claim 11, wherein the second transport device further comprises:
a seating pad (200) provided in the seating groove (110);
an abrasion sensing sensor (300) for sensing abrasion of the seating pad; and
a notification part for notifying pad replacement when the abrasion of the seating pad is sensed by the abrasion sensing sensor.

15. The electrode double packaging device according to claim 11, wherein
the first packaging bag is a polyethylene packaging bag, and
the second packaging bag is an aluminum packaging bag.

## Patentansprüche

1. Transportvorrichtung (1) für eine Doppelelektrodenverpackungsvorrichtung, bei der eine unverpackte Elektrodenrolle (10) primär in einem ersten Verpackungsbeutel (20) verpackt ist und die primär verpackte Elektrodenrolle sekundär in einem zweiten Verpackungsbeutel verpackt ist, umfassend:
einen Sitzteil (100) mit einer Sitznut (40) zum Sitzen der primär verpackten Elektrodenrolle;
einen Bewegungsteil (500) zum Bewegen des Sitzteils;
einen Verpackungsbeutelanordnungsteil (700), der vorgesehen ist, um sich zusammen mit dem Sitzteil durch den Bewegungsteil zu bewegen, und zum engen Anbringen des ersten Verpackungsbeutels (20) in Richtung der Elektrodenrolle, die auf der Sitznut sitzt, wenn er sich bewegt, und
einen Steuerteil (600), der vorgesehen ist, um einen Sitzmodus zum Steuern des Bewegungsteils (500), um den Sitzteil so zu bewegen, dass die Elektrodenrolle in der Sitznut (110) sitzt, und einen Transportmodus zum Transportieren des Sitzteils, auf dem die Elektrodenrolle (10) sitzt, zu einer sekundären Verpackungsstelle durchzuführen.

2. Transportvorrichtung für eine Doppelelektrodenverpackungsvorrichtung nach Anspruch 1, wobei
die Elektrodenrolle einen Körper (11), auf den die Elektrode gewickelt ist, ein Paar von Stützplatten (12), die auf beiden Seiten des Körpers ausgebildet sind, und vorstehende Abschnitte, die so ausgebildet sind, dass sie von der Mitte jeder Stützplatte in einer dem Körper entgegengesetzten Richtung vorstehen, umfasst, und
die Sitznut (110) so vorgesehen ist, dass die vorstehenden Abschnitte der Elektrodenrolle sitzen.

3. Transportvorrichtung für eine Doppelelektrodenverpackungsvorrichtung nach Anspruch 2, wobei
im Sitzmodus der Verpackungsbeutelanordnungsteil (700) den Randabschnitt (22) des ersten Verpackungsbeutels, der um die Stützplatte der Elektrodenrolle positioniert ist, eng an der Stützplattenseite anbringt.

4. Transportvorrichtung für eine Doppelelektrodenverpackungsvorrichtung nach Anspruch 3, wobei
der Sitzmodus einen ersten Bewegungsmodus umfasst, in dem der Sitzteil (100) in einer ersten Richtung bewegt wird, so dass sich die Sitznut (110) an den unteren Enden der vorstehenden Abschnitte (22) der Elektrodenrolle (10) befindet; und
einen zweiten Bewegungsmodus, in dem der Sitzteil in einer zweiten Richtung bewegt wird, die eine senkrechte Richtung zur ersten Richtung ist, so dass die unteren Enden der vorstehenden Abschnitte der Elektrodenrolle auf der Sitznut (110) sitzen.

5. Transportvorrichtung für eine Doppelelektrodenverpackungsvorrichtung nach Anspruch 4, wobei
der Verpackungsbeutelanordnungsteil (700) den ersten Verpackungsbeutelabschnitt der Oberseite des vorstehenden Abschnitts in Richtung der Stützplatte (12) schiebt, während er sich entlang der ersten Richtung von der Oberseite des vorstehenden Abschnitts (13) bewegt.

6. Transportvorrichtung für eine Doppelelektrodenverpackungsvorrichtung nach Anspruch 5, wobei
sich der Verpackungsbeutelanordnungsteil (700) in einem vorbestimmten Abstand von der Stützplatte (12) weg bewegt.

7. Transportvorrichtung für eine Doppelelektrodenverpackungsvorrichtung nach Anspruch 6, wobei
im ersten Bewegungsmodus der Randabschnitt (22) des ersten Verpackungsbeutels, der um die Stützplatte (12) positioniert ist, in dem durch den Spalt (d) zwischen dem Verpackungsbeutelanordnungsteil und der Stützplatte gebildeten Raum untergebracht ist.

8. Transportvorrichtung für eine Doppelelektrodenverpackungsvorrichtung nach Anspruch 1, ferner umfassend:
ein Sitzkissen (200), das in der Sitznut (110) bereitgestellt ist;
einen Abrieberfassungssensor (300) zum Erfassen von Abrieb des Sitzkissens; und
einen Benachrichtigungsteil zum Benachrichtigen über einen Kissenwechsel, wenn der Abrieb des Sitzkissens durch den Abrieberfassungssensor erfasst wird.

9. Transportvorrichtung für eine Doppelelektrodenverpackungsvorrichtung nach Anspruch 8, wobei
der Steuerteil den Betrieb des Bewegungsteils in Abhängigkeit davon steuert, ob der Abrieb des Sitzkissens (200) durch den Abrieberfassungssensor (300) erfasst wird.

10. Transportvorrichtung für eine Doppelelektrodenverpackungsvorrichtung nach Anspruch 9, wobei
das Sitzkissen (200) ein Gummikissen ist,
der Abrieberfassungssensor (300) einen Lasersensor umfasst, und
wenn der Abrieb des Gummikissens durch den Lasersensor erfasst wird, der Steuerteil das Durchführen des Sitzmodus und des Transportmodus des Bewegungsteils stoppt.

11. Doppelelektrodenverpackungsvorrichtung (1), umfassend:
einen Elektrodenrollenzuführteil (1100) zum Zuführen einer unverpackten Elektrodenrolle (10);
einen ersten Verpackungsbeutelzuführteil (2000) zum Zuführen eines ersten Verpackungsbeutels (20) zu einer primären Verpackungsstelle;
einen zweiten Verpackungsbeutelzuführteil (3000) zum Zuführen eines zweiten Verpackungsbeutels aus einem Material, das sich von dem des ersten Verpackungsbeutels unterscheidet, zu einer sekundären Verpackungsstelle;
eine erste Transportvorrichtung (4000) zum Transportieren der unverpackten Elektrodenrolle;
einen ersten Verpackungsteil (5000) zum primären Verpacken der unverpackten Elektrodenrolle, die von der ersten Transportvorrichtung transportiert wird, mit dem ersten Verpackungsbeutel;
eine zweite Transportvorrichtung (6000) zum Transportieren der primär verpackten Elektrodenrolle; und
einen zweiten Verpackungsteil (7000) zum sekundären Verpacken der primär verpackten Elektrodenrolle, die von der zweiten Transportvorrichtung transportiert wird, mit dem zweiten Verpackungsbeutel; wobei
die zweite Transportvorrichtung (6000) umfasst: einen Sitzteil (100) mit einer Sitznut (110), die so vorgesehen ist, dass die primär verpackte Elektrodenrolle sitzen kann;
einen Bewegungsteil (500) zum Bewegen des Sitzteils;
einen Verpackungsbeutelanordnungsteil (70), der vorgesehen ist, um sich zusammen mit dem Sitzteil durch den Bewegungsteil zu bewegen, und zum engen Anbringen des ersten Verpackungsbeutels an der Elektrodenrollenseite, wenn er sich bewegt; und
einen Steuerteil (600), der vorgesehen ist, um einen Sitzmodus zum Steuern des Bewegungsteils, um den Sitzteil (100) so zu bewegen, dass die Elektrodenrolle in der Sitznut (110) sitzt, und einen Transportmodus zum Transportieren des Sitzteils, auf dem die Elektrodenrolle sitzt, zu der sekundären Verpackungsstelle durchzuführen.

12. Doppelelektrodenverpackungsvorrichtung nach Anspruch 11, wobei
die Elektrodenrolle einen Körper (11), auf den die Elektrode gewickelt ist, ein Paar von Stützplatten, die auf beiden Seiten des Körpers ausgebildet sind, und vorstehende Abschnitte (13), die so ausgebildet sind, dass sie von der Mitte jeder Stützplatte (12) in einer dem Körper entgegengesetzten Richtung vorstehen, umfasst,
die Sitznut (110) so vorgesehen ist, dass die vorstehenden Abschnitte der Elektrodenrolle sitzen, und
im Sitzmodus der Verpackungsbeutelanordnungsteil den Randabschnitt des ersten Verpackungsbeutels, der um die Stützplatte der Elektrodenrolle positioniert ist, eng an der Stützplattenseite anbringt.

13. Doppelelektrodenverpackungsvorrichtung nach Anspruch 12, wobei
der Sitzmodus umfasst: einen ersten Bewegungsmodus, in dem der Sitzteil (100) in einer ersten Richtung bewegt wird, so dass sich die Sitznut (110) an den unteren Enden der vorstehenden Abschnitte der Elektrodenrolle befindet; und
einen zweiten Bewegungsmodus, in dem der Sitzteil in einer zweiten Richtung bewegt wird, die eine senkrechte Richtung zur ersten Richtung ist, so dass die unteren Enden der vorstehenden Abschnitte der Elektrodenrolle auf der Sitznut sitzen.

14. Doppelelektrodenverpackungsvorrichtung nach Anspruch 11, wobei die zweite Transportvorrichtung ferner umfasst:
ein Sitzkissen (200), das in der Sitznut (110) bereitgestellt ist;
einen Abrieberfassungssensor (300) zum Erfassen von Abrieb des Sitzkissens; und
einen Benachrichtigungsteil zum Benachrichtigen über einen Kissenwechsel, wenn der Abrieb des Sitzkissens durch den Abrieberfassungssensor erfasst wird.

15. Doppelelektrodenverpackungsvorrichtung nach Anspruch 11, wobei
der erste Verpackungsbeutel ein Polyethylenverpackungsbeutel ist, und
der zweite Verpackungsbeutel ein Aluminiumverpackungsbeutel ist.

## Revendications

1. Dispositif de transport (1) pour un dispositif d'emballage double pour électrode, dans lequel un rouleau d'électrode non emballé (10) est emballé premièrement dans un premier sac d'emballage (20), et le rouleau d'électrode emballé premièrement est emballé secondairement dans un second sac d'emballage, comprenant :
une partie de placement (100) ayant une rainure de placement (40) pour placer le rouleau d'électrode emballé premièrement ;
une partie de déplacement (500) pour déplacer la partie de placement ;
une partie d'agencement de sac d'emballage (700) fournie pour se déplacer en même temps que la partie de placement par la partie de déplacement, et pour fixer étroitement le premier sac d'emballage (20) vers le rouleau d'électrode placé sur la rainure de placement lors du déplacement, et
une partie de commande (600) fournie pour effectuer un mode de placement pour commander à la partie de déplacement (500) de déplacer la partie de placement de sorte que le rouleau d'électrode est placé dans la rainure de placement (110), et un mode de transport pour transporter la partie de placement, sur laquelle le rouleau d'électrode (10) est placé, à un emplacement d'emballage secondaire.

2. Dispositif de transport pour un dispositif d'emballage double pour électrode selon la revendication 1, dans lequel
le rouleau d'électrode comprend un corps (11) sur lequel l'électrode est enroulée, une paire de plaques de support (12) formées des deux côtés du corps, et des parties saillantes (13) formées pour saillir du centre de chaque plaque de support dans une direction opposée au corps, et
la rainure de placement (110) est fournie de telle sorte que les parties saillantes du rouleau d'électrode sont placées.

3. Dispositif de transport pour un dispositif d'emballage double pour électrode selon la revendication 2, dans lequel
dans le mode de placement, la partie d'agencement de sac d'emballage (700) fixe étroitement la partie du bord (22) du premier sac d'emballage positionné autour de la plaque de support du rouleau d'électrode sur le côté de la plaque de support.

4. Dispositif de transport pour un dispositif d'emballage double pour électrode selon la revendication 3, dans lequel
le mode de placement comprend un premier mode de déplacement dans lequel la partie de placement (100) est déplacée dans une première direction de sorte que la rainure de placement (110) est située aux extrémités inférieures des parties saillantes (22) du rouleau d'électrode (10) ; et
un second mode de déplacement dans lequel la partie de placement est déplacée dans une seconde direction qui est une direction perpendiculaire à la première direction de sorte que les extrémités inférieures des parties saillantes du rouleau d'électrode sont placées sur la rainure de placement (110).

5. Dispositif de transport pour un dispositif d'emballage double pour électrode selon la revendication 4, dans lequel, lors du premier mode de déplacement,
la partie d'agencement de sac d'emballage (700) pousse la partie supérieure du premier sac d'emballage de la partie saillante vers la plaque de support (12) pendant le déplacement le long de la première direction depuis la partie supérieure de la partie saillante (13).

6. Dispositif de transport pour un dispositif d'emballage double pour électrode selon la revendication 5, dans lequel lors du premier mode de déplacement,
la partie d'agencement de sac d'emballage (700) se déplace à une distance prédéterminée de la plaque de support (12).

7. Dispositif de transport pour un dispositif d'emballage double pour électrode selon la revendication 6, dans lequel
lors du premier mode de déplacement, la partie du bord (22) du premier sac d'emballage positionné autour de la plaque de support (12) est accueillie dans l'espace formé par l'écart (d) entre la partie d'agencement de sac d'emballage et la plaque de support.

8. Dispositif de transport pour un dispositif d'emballage double pour électrode selon la revendication 1, comprenant en outre :
un coussin de placement (200) fourni dans la rainure de placement (110) ;
un capteur de détection d'abrasion (300) pour détecter l'abrasion du coussin de placement ; et
une partie de notification pour notifier le remplacement de coussin quand l'abrasion du coussin de placement est détectée par le capteur de détection d'abrasion.

9. Dispositif de transport pour un dispositif d'emballage double pour électrode selon la revendication 8, dans lequel
la partie de commande le fonctionnement de la partie de déplacement selon que l'abrasion du coussin de placement (200) est détectée par le capteur de détection d'abrasion (300).

10. Dispositif de transport pour un dispositif d'emballage double pour électrode selon la revendication 9, dans lequel
le coussin de placement (200) est un coussin de caoutchouc,
le capteur de détection d'abrasion (300) comprend un capteur laser, et
quand l'abrasion du coussin de caoutchouc par le capteur laser est détectée, la partie de commande arrête d'effectuer le mode de placement et le mode de transport de la partie de déplacement.

11. Dispositif d'emballage double pour électrode (1) comprenant :
une partie de fourniture de rouleau d'électrode (1100) pour fournir un rouleau d'électrode non emballé (10) ;
une partie de fourniture de premier sac d'emballage (2000) pour fournir un premier sac d'emballage (20) à un premier emplacement d'emballage ;
une partie de fourniture de second sac d'emballage (3000) pour fournir un second sac d'emballage d'un matériau différent de celui du premier sac d'emballage à un emplacement d'emballage secondaire ;
un premier dispositif de transport (4000) pour transporter le rouleau d'électrode non emballé ;
une première partie d'emballage (5000) pour emballer premièrement le rouleau d'électrode non emballé transporté par le premier dispositif de transport avec le premier sac d'emballage ;
un second dispositif de transport (6000) pour transporter le rouleau d'électrode emballé premièrement ; et
une seconde partie d'emballage (7000) pour emballer secondairement le rouleau d'électrode emballé premièrement transporté par le second dispositif de transport avec le second sac d'emballage ; dans lequel
le second dispositif de transport (6000) comprend :
une partie de placement (100) ayant une rainure de placement (110) fournie de sorte que le rouleau d'électrode emballé premièrement peut être placé ;
une partie de déplacement (500) pour déplacer la partie de placement ;
une partie d'agencement de sac d'emballage (70) fournie pour se déplacer en même temps que la partie de placement par la partie de déplacement, et pour fixer étroitement le premier sac d'emballage sur le côté du rouleau d'électrode lors du déplacement ; et
une partie de commande (600) fournie pour effectuer un mode de placement pour commander à la partie de déplacement de déplacer la partie de placement (100) de sorte que le rouleau d'électrode est placé dans la rainure de placement (110), et un mode de transport pour transporter la partie de placement, sur laquelle le rouleau d'électrode est placé, à l'emplacement d'emballage secondaire.

12. Dispositif d'emballage double pour électrode selon la revendication 11, dans lequel
le rouleau d'électrode comprend un corps (11) sur lequel l'électrode est enroulée, une paire de plaques de support formées des deux côtés du corps, et des parties saillantes (13) formées pour saillir du centre de chaque plaque de support (12) dans une direction opposée au corps,
la rainure de placement (110) est fournie de telle sorte que les parties saillantes du rouleau d'électrode sont placées, et
dans le mode de placement, la partie d'agencement de sac d'emballage fixe étroitement la partie du bord du premier sac d'emballage positionné autour de la plaque de support du rouleau d'électrode sur le côté de la plaque de support.

13. Dispositif d'emballage double pour électrode selon la revendication 12, dans lequel
le mode de placement comprend :
un premier mode de déplacement dans lequel la partie de placement (100) est déplacée dans une première direction de sorte que la rainure de placement (110) est située aux extrémités inférieures des parties saillantes du rouleau d'électrode ; et
un second mode de déplacement dans lequel la partie de placement est déplacée dans une seconde direction qui est une direction perpendiculaire à la première direction de sorte que les extrémités inférieures des parties saillantes du rouleau d'électrode sont placées sur la rainure de placement.

14. Dispositif d'emballage double pour électrode selon la revendication 11, dans lequel le second dispositif de transport comprend en outre :
un coussin de placement (200) fourni dans la rainure de placement (110) ;
un capteur de détection d'abrasion (300) pour détecter l'abrasion du coussin de placement ; et
une partie de notification pour notifier le remplacement de coussin quand l'abrasion du coussin de placement est détectée par le capteur de détection d'abrasion.

15. Dispositif d'emballage double pour électrode selon la revendication 11, dans lequel
le premier sac d'emballage est un sac d'emballage en polyéthylène, et
le second sac d'emballage est un sac d'emballage en aluminium.
